# EUROPEAN PATENT APPLICATION

(11) **EP 1 586 606 A1**
(43) Date of publication of application: **19.10.2005**
(21) Application number: 04101527.2
(22) Date of filing: 14.04.2004
(51) Int. Cl.: C08L 95/00, C08L 53/02

(54) **An asphalt binder based on polymer modified bitumen, hot mix asphalts made thereof, and pavements made therefrom**

(71) Applicant: KRATON Polymers Research B.V., 1031 CM Amsterdam (NL)
(72) Inventor: Korenstra, Jan, 1031 CM Amsterdam (NL); Vonk, Willem C., 1031 CM Amsterdam (NL); van Dijk, Cornelis Martinus, 1031 CM Amsterdam (NL)
(74) Representative: Kortekaas, Marcel C.J.A.

(57) **Abstract**

An asphalt binder comprising 85 to 98.5 parts by weight of a bitumen and 15-1.5 parts by weight of a polymer composition, wherein the polymer composition comprises:
(i) from 5 to 70% by weight of a linear styrenic block copolymer (SBC1) comprising at least two polymer blocks each substantially made of an aromatic vinyl compound and at least one polymer block substantially made of a conjugated diene compound and having an apparent molecular weight greater than 250,000 and/or a radial styrenic block copolymer (SBC2) having three or more polymer arms attached to the residue of a cross-linking agent or multifunctional compound, comprising at least two polymer blocks each substantially made of an aromatic vinyl compound and at least one polymer block substantially made of a conjugated diene compound and wherein the polymer arms have an average apparent molecular weight greater than 125,000 and
(ii) from 95 to 30% by weight of an elastomer (EI) having an apparent molecular weight in the range of 120,000 to 250,000, preferably a styrenic diblock copolymer having one polymer block substantially made of an aromatic vinyl compound and at least one polymer block substantially made of a conjugated diene compound.

## Description

### Background Art

According to the Transportation Research Board the most common type of flexible pavement surfacing in the U.S. is hot mix asphalt (HMA). Hot mix asphalt is known by many different names such as hot mix, asphalt, or blacktop. HMA consists of two basic ingredients: aggregate and asphalt binder (bitumen).

Asphalt binders nowadays often comprise a mixture of bitumen and polymer. Of these polymers, the thermoplastic rubbers forming a continuous network are the most commonly used polymers, and have led to various papers on the subject matter. In **GROS, William A., et al** The Influence of Styrene-Butadiene Diblock Copolymer on Styrene-Butadiene-Styrene Triblock Copolymer Viscoelastic Properties and Product Performance. J. *appl. polym. sci. ,* 1995, vol. 56, p. 947-958. , for instance, the effects of SB diblock copolymer on the complex shear modulus and elasticity of a polymer-modified asphalt is described, with a predicted lack of network participation for the SB diblock, accounting for lower strength and greater temperature susceptibility of diblock-containing systems. This article hence suggests a departure from diblock containing asphalt binders.

In **US 4196115** (PHILIPS) 01.04.1980 blends are described of different conjugated diene/monovinyl aromatic copolymers in bituminous based roofing and waterproofing membranes. Thus a radial conjugated diene/monovinyl aromatic copolymer having a weight average molecular weight (Mw) above 200,000 and a conjugated diene/monovinyl aromatic ratio of 50/50 to 85/15 is used together with a conjugated diene/monovinyl aromatic copolymer having an Mw below 200,000 and being radial or linear, with same conjugated diene/monovinyl aromatic weight ratios as earlier given, in an asphalt-containing composition to yield desirable high as well as low temperature properties. It is suggested that the high Mw copolymer contributes to the high temperature stability, e.g., low or no flow between 25°-100°C and that the low Mw copolymer contributes to low temperature flexibility, e.g., no cracking at -25°C.

There are numerous examples of asphalt binders to be found in the patent literature. **US 5863971** (SHELL) 26.01.1999 provides a process for preparing a bitumen composition which comprises mixing at an elevated temperature an oxidised bitumen having a penetration index of at least 0 with a thermoplastic rubber which is present in an amount of less than 5% wt., based on total bitumen composition. It further provides bitumen compositions obtainable by such process; and the use of such bitumen compositions in asphalt mixtures for road applications

**US 5773496** (KOCH) 30.06.1998 and **US 5795929** (KOCH) 18.08.1998 relate to an asphalt composition prepared from bitumen (asphalt), linear and non-linear copolymers of styrene and butadiene, further comprising respectively cross-linking agents, and emulsifiers ('929) or elemental sulphur ('496). The asphalt polymer compositions are useful for industrial applications, such as hot-mix and emulsified asphalts used with aggregates for road paving, and repair.

**US 6150439** (JAPAN ELASTOMER CO) 21.11.2000 claims a block copolymer composition for modifying asphalt, which comprises a mixture of: (A) a block copolymer comprising: at least two polymer blocks each mainly comprising a monoalkenyl aromatic compound; and at least one polymer block mainly comprising a conjugated diene compound; and (B) a block copolymer comprising: at least one polymer block mainly comprising a monoalkenyl aromatic compound; and at least one copolymer block mainly comprising a conjugated diene compound, and having a molecular weight equivalent to 1/3 to 2/3 of the molecular weight of block copolymer (A), wherein (a) the total bonding alkenyl aromatic compound content in the mixture of block copolymers (A) and (B) is from 10 to 50% by weight, wherein (b) the vinyl bond content in the conjugated diene polymer blocks is not greater than 70% by weight, and wherein the block copolymer composition has: (c) a content of (A) component of from 98 to 20% by weight and a content of (B) component of from 2 to 80% by weight; (d) a melt index value of from 0.3 to 15.0 g/10 min; (e) a bulk density of from 0.1 to 0.7; (f) a particle size distribution such that the content of constituents remaining on a 5-mesh sieve is not greater than 30% by weight and the content of constituents passing through a 20-mesh sieve is not greater than 30% by weight; and (g) a total pore volume of from 100 to 2,000 mm³/g.

Further patent applications by the same applicant and/or inventor include **JP 10212416** (NIPPON ELASTOMER KK) 11.08.1998 , which has as its problem to be solved: To obtain an asphalt composition manifesting high softening point, excellent in mechanical strengths, processability and storing stability and suitable for road paving by compounding a specific amount of a composition of a block copolymer of an alkenyl aromatic compound having a specific structure and a conjugated diene. The proposed solution comprises the use of a composition consisting of (A) 3-15 parts of the block copolymer composition having 0.3-15.0 of melt flow index and 80-130 °C of softening point, (B) 85-97 parts of asphalt, wherein component (A) consists of 98-20wt.% of a block copolymer (A1 ) comprising a polymer block (R1 ) mainly consisting of at least two monoalkenyl aromatic compounds and a copolymer block (R2 ) mainly consisting of the conjugated diene polymer (X), and 2-80% of a block copolymer (A2 ) comprising R1 and R2 having peak molecular weight corresponding to 1/3-2/3 of (A1), the difference between total amount of alkenyl aromatic compounds (Z) and R1 content is 2-30%, the contents of Z and R1 are 10-50% respectively, the amount of vinyl bond in the X is 0-50%.

In **JP 1254768** (NIPPON ELASTOMER KK) 11.10.1989 , **JP 6041439** ( NIPPON ELASTOMER KK) 15.02.1994 and **JP 9012898** (NIPPON ELASTOMER KK) 14.01.1997 a similar asphalt composition is described comprising a block copolymer having a random copolymer block of the alkenyl aromatic compound and the conjugated diene polymer; or a mixture of a triblock copolymer and a diblock copolymer, respectively such block copolymers with a random copolymer block of the alkenyl aromatic compound and the conjugated diene polymer.

In **JP 3143961** (ASAHI) 19.06.1991 an asphalt composition is described with excellent heat resistance and processability, and with an improved balance of properties such as softenting point, rate of penetration, elongation, cohesive force and grasp of aggregate by using a composition comprising 30-95%wt of a styrenic block copolymer composition having a vinyl aromatic hydrocarbon content (S) of 10-35w%, a contents of vinyl bonds in the butadiene block (V) of 15-55% and satisfying the relation of 35≤S+V≤75, and 5-70%wt of a block copolymer having a polyisoprene block.

In **GB 2294935** (SHELL) 15.05.1996 and asphalt composition is described containing highly coupled radial block copolymers of a conjugated diolefin and a vinyl aromatic hydrocarbon.

In **JP 8165436** (J S R SHELL ELASTOMER KK ) 25.06.1996 and **JP 8225711** (J S R SHELL ELASTOMER KK ) 03.09.1996 asphalt compositions are described comprising a specific block copolymer expressed by general formulae: (A₁ -B₁ )n X; (A₁ -B₁ -A₅ )ₙ X; A₂ -B_{2;} A₂ -B₂ -A₆ (A₃ -B₃ )ₙ Y; (A₃ -B₃ -A₇ )ₙ Y; and A₄ -B₄ -A₈ -B₅ , wherein A₁ to A₈ are each a polymer block consisting essentially of an aromatic vinyl compound; B₁ to B₅ each represents a polymer block consisting essentially of a conjugated diene; X is the residue of a coupling agent; Y is a residue of a multifunctional monomer; and n is an integer of 1 to 6.

Finally, in **US 6136899** (GOODYEAR ) 24.10.2000 it has been determined that a specific type of emulsion SBR can be used to modify asphalt cement to greatly enhance the resistance to shoving, rutting and low temperature cracking of asphalt concretes made therewith. The SBR used for asphalt cement modification is a blend of (i) a high molecular weight styrene-butadiene rubber having a weight average molecular weight of at least about 300,000 and (ii) a low molecular weight styrene-butadiene rubber having a weight average molecular weight of less than about 280,000; wherein the ratio of the high molecular weight styrene-butadiene rubber to the low molecular weight styrene-butadiene rubber is within the range of about 80:20 to about 25:75; and wherein the bound styrene content of the high molecular weight styrene-butadiene rubber differs from the bound styrene content of the low molecular weight styrene-butadiene rubber by at least 5 percentage points. It should be realized, however, that SBR does not form continuous networks.

HMA's are made by heating and blending the aggregate and asphalt binder, e.g., in a batch plant or a drum mix plant. During mixing, the hot asphalt binder must be readily able to coat the dried and heated mineral aggregate, given the shearing conditions employed, in a relatively short period of time (typically 30 to 90 seconds). Whilst the mixing temperature must be sufficiently high to allow rapid distribution of the asphalt binder on the aggregate, the use of the lowest temperature possible is advocated to avoid excessive oxidation of the bitumen. There are therefore upper and lower limits to mixing temperature. The material so produced is generally stored in silos before being discharged into trucks. So called "gap graded" HMA's commonly suffer from drainage or drain-down, a process in which the excess asphalt binder comes off the aggregates during storage or transport.

Until about 20 years ago asphalt mixes were dense and often had a continuous grading of aggregate to reduce the voids volume. Asphalt binder content was optimised to get the right balance of properties. This generally avoided the issue of drain-down or drainage of the asphalt binder. Also, adding filler helped avoiding the issue of drainage.

More recently, however, mixes have been developed that consist of a rather different aggregate grading. Some contain more voids deliberately for reasons of water drainage in service and noise reduction, while others are dense but gap-graded (no continuity in the aggregate grading). Examples of such gap-graded mixes are porous asphalt, based on so-called "open-graded" aggregate; stone mastic asphalt or stone matrix asphalt (SMA) based on so-called "gap-graded" material, and also (ultra) thin overlays are based on this concept. The gap-graded aggregate mixture provides a stable stone-to-stone skeleton, and through aggregate interlock and particle friction give the structure its stability. These HMA's are more prone to drain-down for reasons described below.

The present inventors set out to solve the problem of drain-down, without adversely affecting the processability of the HMA, while improving its performance in service

The maximum binder content of these open and gap graded mixes at which no drainage will take place is typically lower than what is desirable in use. For instance in porous asphalt the maximum would be at 3 to 3.5% by weight of asphalt binder. However, with their open structure this would result in excessive hardening of the binder and hence early brittle failure. It is desirable to increase the thickness of the binder films by increasing the asphalt binder content, which then leads to binder drainage during storage and transport. SMAs are mixes that are basically similar to porous asphalt, but instead of having excessive air voids, the voids are filled with mortar of asphalt binder, filler, sand and small aggregate. In these mixes too, storage and transport will lead to binder drainage if no counter measures are taken.

There are several ways to reduce or inhibit drainage. One way is to add fibres. Fibres can provide an excellent resistance to binder drainage, but do not contribute much to the overall performance of the mix.

Finally, the addition of polymers to the bitumen may reduce the drainage due to their increase in viscosity of the binder so-produced. However, there is obviously a limit to the amount of polymer, as it will not only reduce drainage, but will also make it more difficult to mix, lay and compact the mix.

The present inventors therefore set out to find an asphalt binder that does not suffer from drain-down, whilst maintaining processability at all stages of blending, mixing, laying and compaction using standard available equipment.

### Disclosure of Invention"

Accordingly, an asphalt binder comprising 85 to 98.5 parts by weight of a bitumen and 15-1.5 parts by weight of a polymer composition, wherein the polymer composition comprises:
(i) from 5 to 70% by weight of a linear styrenic block copolymer (SBC1) comprising at least two polymer blocks each substantially made of an aromatic vinyl compound and at least one polymer block substantially made of a conjugated diene compound and having an apparent molecular weight greater than 250,000 and/or a radial styrenic block copolymer (SBC2) having three or more polymer arms attached to the residue of a cross-linking agent or multifunctional compound, comprising at least two polymer blocks each substantially made of an aromatic vinyl compound and at least one polymer block substantially made of a conjugated diene compound and wherein the polymer arms have an average apparent molecular weight greater than 125,000 and
(ii) from 95 to 30% by weight of an elastomer (EI) having an apparent molecular weight in the range of 120,000 to 250,000, preferably a styrenic diblock copolymer having one polymer block substantially made of an aromatic vinyl compound and at least one polymer block substantially made of a conjugated diene compound.

In addition, a hot mix asphalt is provided comprising 2 to 8 parts by weight of the asphalt binder of the present invention and 98 to 92 parts by weight aggregate material, preferably of gap-graded aggregate such as open gap-graded or dense gap-aggregate material.

Furthermore, a pavement is claimed, produced from the open or gap-graded mixes, by compacting the hot mix asphalt mentioned above.

### Mode(s) for Carrying Out the Invention

The modification of bitumen by the addition of various polymers and elastomers is known. Such elastomers include polybutadiene, polyisoprene, conjugated diene copolymers, natural rubber, butyl rubber, chloroprene, random styrene-butadiene rubber, and styrene-butadiene diblock copolymers. In addition bitumen's have been modified with a special class of elastomers, so-called thermoplastic elastomers, which derive their strength and elasticity from a physical cross-linking of the molecules into three-dimensional networks. Of the four main groups of thermoplastic elastomers, polyurethane, polyether-polyester copolymers, olefinic copolymers and styrenic block copolymer, the latter have proved to be the thermoplastic elastomer with the greatest potential when blended with bitumen.

The present invention realizes sufficient processability of the asphalt binder at the mixing stage, with little or no drainage of the asphalt binder at the storage or transport stage and with sufficient workability at the compacting stage.

Whilst achieving the aforementioned properties will greatly improve the future of open or porous asphalt for road construction, ideally these achievements should be obtained without adversely effecting or preferably even improving the properties of the final pavement. Thus, the softening point of the asphalt binder has been found to be important too. The present invention solves these problems by using a polymer composition comprising a high molecular weight styrenic block copolymer combined with a low molecular weight elastomer.

Preferably, the styrenic block copolymer has a molecular weight in the range of 250,000 to 800,000 if said copolymer is a linear polymer, or in the range of 500,000 to 1,500,000 if said copolymer is a branched or star-shaped polymer.

Most preferably the styrenic block copolymer constituents are selected from the group consisting of

A-B-A-(B)ₚ or (A-B)₂ X (II)

wherein A represents the polymer block substantially made of an aromatic vinyl compound, typically a polystyrene block; B a polymer block substantially made of a conjugated diene, typically a polybutadiene block, n is an integer greater than or equal to 1, p is 0 or 1, and X is the residue of a coupling agent or multifunctional monomer.

These preferred styrenic block copolymer constituents are selected from a larger group of styrenic block copolymers, that all may be used in the compositions of the present invention, consisting of those of the formulae

(B)ₚ -(A-B)₂ X; or (B)ₚ -A(B-A)ₙ -(B)ₚ, (linear SBC1)

((B)ₚ (A-B)ₙ)ₘ X (radial SBC2)

wherein A, B, p and X have the meaning set out above, n is an integer greater than or equal to 1, and m is an integer greater than 2.

The expression "substantially" as used herein means that sufficient vinyl aromatic compound is used, for instance at least 50% by weight, to provide a hard block A having a glass transition temperature of greater than 25°C, whereas in terms of the block B the expression "substantially" means that sufficient conjugated diene is used, for instance at least 70% by weight, to provide an elastomer block having a glass transition temperature below 25°C.

The content of the vinyl aromatic compound in the styrenic block copolymer is from 10 to 50% by weight, preferably from 15 to 40% by weight.

The vinyl aromatic compound may be selected from compounds having 8 to 18 carbon atoms per molecule. For instance, some representative examples thereof include: styrene; 1-vinylnaphthalene; 3-methylstyrene; 3,5-diethylstyrene; 4-propylstyrene; 2,4,6-trimethylstyrene; 4-dodecylstyrene; 3-methyl,5-n-hexylstyrene; 4-phenylstyrene; 2-ethyl,4-benzylstyrene; 2,3,4,5-tetraethylstyrene; 3-ethyl-1-vinylnaphthalene; alpha-methylstyrene, and the like. Preferred examples comprise 3-methylstyrene, styrene and mixtures thereof, styrene being most preferred. Compounds that may be copolymerized and form part of the A block(s) may be selected from the conjugated dienes hereafter, and other anionically polymerizable, ethylenically unsaturated compounds, such as vinylcyclohexane, methylmethacrylate and the like. Most preferably each polymer block A is a polystyrene block.

Block B is preferably made from butadiene, isoprene or mixtures thereof. Conjugated dienes that can be used, preferably having from 4 to 12 carbon atoms per molecule, further include 2,3-dimethyl-1,3-butadiene, piperylene, 3-butyl-1,3-octadiene, phenyl-1,3-butadiene, and the like. Said block(s) may also comprise other monomers, such as the vinyl aromatic compounds mentioned herein above. Most preferably block B is a polybutadiene block.

As is known, butadiene (and other conjugated dienes) may polymerize in 1,4-addition manner and/or 1,2-addition manner. The latter results in pending vinyl groups. It is known in the art to use styrenic block copolymers having relatively high vinyl content, e.g. up to 70% and higher (based on the conjugated diene), e.g. by polymerizing the conjugated diene monomer in the presence of a polar cosolvent and/or at a relatively cool polymerization temperature. In producing the polymer block (B) under ordinary conditions a vinyl content of less than 25% is obtained. Both high vinyl and ordinary styrenic block copolymers may be used.

Styrenic block copolymer and elastomer may be used in relative amounts of 15 to 70% by weight (SBC1 and/or SBC2) and 85 to 30% by weight (EI), respectively, but preferably in relative amounts 20 to 50% by weight (SBC1 and/or SBC2) and 80 to 50% by weight (EI). Most preferably, the relative amounts are selected within the aforementioned range on the basis of some scouting experiments, to compensate for the effect of the molecular weights of these components and the effect of the bitumen.

Depending on their method of preparation these SBC's are known to comprise diblock copolymers of formula A-B in various amounts. Indeed, in coupling reactions, the diblock copolymers of formula A-B have the same molecular weight of the arms in the coupled polymer.

The co-produced diblock copolymer of formula A-B may be the low molecular weight elastomer (EI) component of the polymer composition, provided it has a molecular weight in the range of from 10,000 to 250.000 and is present in an amount in the range of 85 to 30% by weight basis the polymer composition. This is the preferred embodiment. On the other hand, elastomer (EI) may be a separate elastomer, selected from the elastomers mentioned herein before. Elastomer (EI) may also be a diblock copolymer produced independent of the preparation of the styrenic block copolymer (A).

The polymer composition that has been found to be most suitable for the present application is a high mol weight styrene-butadiene-styrene coupled block copolymer with a large amount of di-block, with the following characteristics:
styrene content in the range of 25-40%, preferably about 30% by weight:
diblock molecular weight 180,000-215,000, preferably about 200,000:
diblock content 75-85%, preferably 80% by weight (which corresponds with a coupling efficiency of 15-25, preferably 20%);
having a linear structure (manufactured with a difunctional coupling agent), having an apparent MW (SBS) of 30,000-40,000//300,000-350,000//30,000-40,000, preferably 36000 - 328000 - 36000.

This polymer composition is believed to be novel and is therefore claimed herein as well, as is its use in other applications.

With the term "apparent molecular weight", as used throughout the present specification, is meant the molecular weight, as measured by means of Gel Permeation Chromatography (GPC), relative to commercially available poly(styrene) calibration standards (according to ASTM D6474-99).

The asphalt component may be naturally occurring bitumen or derived from a mineral oil. Also petroleum derivatives obtained by a cracking process, pitch and coal tar can be used as the asphalt components, as well as the blends of various asphalt materials. Examples of suitable components include distillation or "straight-run" bitumens, precipitation bitumens, e.g., propane bitumens, blown bitumens and mixtures thereof. Other suitable bitumens include mixtures of one or more of these bitumens with extenders such as petroleum extracts, e.g. aromatic extracts, distillates or residues, or with oils. Some representative examples of bitumens that may be used in the present invention have a PEN value of below about 300 as measured by ASTM Method D5.

For Hot Mix Asphalt compositions the preferred ranges are 3 to 8 parts on 97 to 92 parts of aggregate, more preferably from 4 to 8 parts on 96 to 92 parts of aggregate (parts by weight).

The aggregate materials basically comprise inert granular materials such as rocks, stones, crushed stones, gravel, sand and filler. Aggregate material is used in different sizes from rather small to relatively course, e.g., less than 0.075 mm ⌀, and up to 40 mm ⌀, and is available in all sizes between the given boundaries. The aggregate composition is then chosen so that it fulfils mechanical/structural requirements, which can either be a continuous grading or gap-grading.

Aggregates can either be natural or manufactured. Natural gravel and sand are usually dug or dredged from a pit, river, lake, or seabed. Crushed aggregate is produced by crushing quarry rock, boulders, cobbles, or large-size gravel. Recycled concrete is a viable source of aggregate, as is the use of industrial by-products such as slag (by-product of metallurgical processing). Aggregate processing consists of crushing, screening, and washing the aggregate to obtain proper cleanliness and gradation. If necessary, a benefaction process such as jigging or heavy media separation can be used to upgrade the quality. Once processed, the aggregates are handled and stored in a way that minimizes segregation and degradation and prevents contamination. Aggregates strongly influence the properties of a HMA composition, mixture proportions, and economy. Consequently, selection of aggregates is an important process. Although some variation in aggregate properties is expected, characteristics that are considered when selecting aggregate include:
grading; durability; particle shape and surface texture; abrasion and skid resistance; unit weights and voids; and absorption and surface moisture.

Grading refers to the determination of the particle-size distribution for aggregate. Grading limits and maximum aggregate size are specified because grading and size affect the amount of aggregate used as well as workability and durability of hot mix asphalt.

The selection of aggregate size can be such that the voids left by the coarsest particles are filled by smaller particles. The voids between the smaller particles are yet again filled by even smaller particles and so on. In this case the grading is called continuous. The selection can also be such that a certain particle size is left out. In this case the aggregate material is referred to as a gap-graded mix.

In the below table, examples are given of some standard aggregate materials. In the left hand column the diameter of the sieve size is given. Thus, using a sieve having 11.2 mm size holes only some 0-6 parts by weight of aggregate material is retained. In case of a sieve having 63 mu size holes, nearly all aggregate material is retained. What is obvious from these examples is that the distribution in continuous graded aggregate is roughly equal, whereas such is not the case in open gap-graded and dense gap-graded aggregates.

**Table 1**

| **sieve size □** | **continuous graded** | **Open gap-graded** | **Dense gap-graded** |
|---|---|---|---|
| C11,2mm | 0-6 | 0-5 | 0-8 |
| C8 mm | 5-25 | 60-85 | 40-55 |
| C5,6 mm | 25-50 | 80-85 | 60-75 |
| 2 mm | 52-58 | 85 | 72.2-82.5 |
| 63 mu | 92.5-94 | 95.5 | 90-94 |

Other components that may be used include fillers and reinforcing agents such as ground tires, silica, talc, calcium carbonate, mineral matter powder, and fibres (glass, cellulose, acryl, and rock); curing agents such as sulphur and sulphur compounds; pigments; softening agents such as paraffinic, naphthenic or aromatic oils; tackiness imparting resins; foaming agents; and stiffeners such as waxes and low molecular weight polyolefins.

In addition to the binder composition and the new polymer composition, the present invention also concerns pavements and overlays based on the asphalt binder described above.

In addition to gap graded asphalt, the new polymer composition and the binder may be used in crack filler applications, where the polymer offers the elasticity and softness desired for crack filler; in self adhered membranes, and in high efficiency crosslinked product for paving. They may also be used in shingles and roofing felts, carpet backing and sound deadening, as well as in coatings based on polymer modified bitumen.

The new polymer composition may also find other end-uses. For instance it may be used in blends with thermoplastic polymers to improve the impact resistance of the polymer systems. Thermoplastics in particular are polystyrene and polyphenylene oxide, and poly(styrene-methylmethacrylate), and high impact polystyrene. Inclusion of the new polymer composition will improve toughness of these polymer systems. Also, the polymer composition can be used in sheet moulding compounds together with unsaturated polyester, styrene monomer, fillers, glass fibre, and peroxide crosslinker. The advantage of using the new polymer composition is to provide good shrink control of the sheet moulding compounds. The polymer composition and blends thereof may also find use in adhesive, sealant and coating compositions, in oil gels (e.g., as cable filling component) and in footwear.

The present invention will hereinafter be illustrated more specifically by the following examples, however without restricting the scope to these specific embodiments.

### Test methods

Standard tests were carried out for softening point Ring &Ball (according to ASTM D36), Penetration at 25°C (ASTM D5), elastic recovery (DIN 52013), and fracture toughness (analogous to ASTM E399).

In addition the dynamic viscosity at 150°C was determined, which is the temperature at which HMA is typically hauled. At blending conditions (which are at temperatures even above 150°C, involving high shear) the dynamic viscosity should be low, whereas during transport it should be high.

The dynamic viscosity was also determined at 120°C as a function of shear rate. This test models the temperature and shear conditions during compacting. An ideal HMA should have a low dynamic viscosity at high temperatures and high shear conditions, a high dynamic viscosity at 150°C at low shear conditions, coupled with a drop in dynamic viscosity at high shear conditions at 120°C.

Shear-rate dependency has been measured using a Haake Rotoviscometer with beaker and coaxial cylinder and shear rates from 20 to 500s⁻¹.

### Synthesis of the block copolymer compositions SBS-1. SBS-2 and SBS-3

Cyclohexane, styrene, and butadiene were purified by activated aluminumoxide and stored at 4 °C under a nitrogen atmosphere. EPON™ 826 (a diglycidyl ether) was used as coupling agent. An autoclave, equipped with a helical stirrer was charged with cyclohexane and the content was heated to 50 to 60 °C. As initiator sec-BuLi was dosed immediately followed by styrene monomer, which was allowed to polymerize to completion. The reaction temperature was increased to 70 °C, at which temperature butadiene was dosed and reacted. The resulting diblock was coupled with an excess EPON™ 826. This excess was optionally scavenged with sec-BuLi and followed by addition of ethanol as terminator. The reaction mixture was cooled to 40 °C, transported to a blending vessel and a stabilization package was added (comprising IRGANOX™ 565 and tris(nonylphenol)phosphite 0.08/0.35 phr as a cyclohexane solution) and stirred at RT. Dry rubber was obtained by steam coagulation finishing, followed by drying in an oven.

The polymers were analyzed by GPC. The results of the GPC analysis are in Table 2.

The polymer modified binders were based on a PX-100 bitumen (a PEN 100 bitumen consisting of 75% propane bitumen and 25% Brightstock Furfural Extract) by blending the polymer composition or components at a modification level of 5% by weight polymer composition or total weight of the components with the bitumen at 160 - 180°C

### Example 1

Polymer modified binders were made with 100% triblock or diblock styrenic block copolymer (Comparatives A and B), with a combination of a triblock and diblock styrenic block copolymer at weight ratios 85/15, 70/30 and 50/50 (Experiments 1-3), as well as with the synthesised SBS-1, SBS-2 and SBS-3 (Experiments 4-6) mentioned above. Results from Table 3 show that Comparative A does not exhibit the desired drop in viscosity as a result of shear (shear thinning). Comparative B does exhibit a drop in viscosity, but at a dynamic viscosity level at 150°C that prohibits successful mixing. Table 4 lists the results of Experiments 1-3, Table 5 lists the results of Experiments 4-6. These experiments reveal the desired viscosity behaviour.

**Table 2**

| **Polymer** | **SB diblock** | **SBS triblock** | **SBS-1** | **SBS-2** | **SBS-3** |
|---|---|---|---|---|---|
| Total Mw (di) | 139,700 | - | 189,500 | 177,800 | 169,400 |
| Total Mw (tri) | - | 294,100 | 379,000 | 355,600 | 338,800 |
| CE (%) | 0 | 0 | 23.3 | 27.8 | 37 |
| PSC (%) | 30 | 30 | 30 | 30 | 30 |

CE = coupling efficiency; PSC = Polystyrene content.

**Table 3**

| **Properties** | **Comp A** | | **Comp B** | |
|---|---|---|---|---|
| | **(SB)** | | **(SBS)** | |
| Softening point R&B (°C) | 53.5 | | 105.5 | |
| Penetration at 25°C (dmm) | 66 | | 59 | |
| Elastic recovery 20 cm, 13°C (%) | 45.7 | | 93.3 | |
| Ductility 13°C, cm | 43.9 | | >100 | |
| Dynamic visc. 150°C, 26s ⁻¹ (mPas) | 439 | | 1282 | |
| Dynamic visc. 150°C, 395s⁻¹ (mPas) | 460 | | 1040 | |
| Dynamic visc. 120°C, | | 2540 | | 4415 |
| 26s⁻¹ (mPas) | | 2454 | | 3306 |
| 52 | | 2429 | | 2960 |
| 79 | | 2418 | | 2757 |
| 105 | | 2368 | | |
| 132 | | | | |

**Table 4**

| **Properties** | **Exp 1** | | **Exp 2** | | **Exp 3** | |
|---|---|---|---|---|---|---|
| | | **(85/15)** | | **(70/30)** | | **(50/50)** |
| Softening point | 58.5 | | 67.5 | | 92 | |
| R&B (°C) | | | | | | |
| Penetration at 25°C (dmm) | 64 | | 62 | | 61 | |
| Elastic recovery 20 cm, 13°C (%) | 70.3 | | 76.8 | | 83.8 | |
| Ductility 13°C, cm | >100 | | >100 | | >100 | |
| Dynamic visc. 150°C, 26s⁻¹ (mPas) | 510 | | 586 | | 763 | |
| Dynamic visc. 150°C, 395s⁻¹ (mPas) | 537 | | 613 | | 765 | |
| Dynamic visc. 120°C, 26s⁻¹ (mPas) | | 2804 | | 3168 | | 3550 |
| | | 2450 | | 2639 | | 2875 |
| | | 2368 | | 2461 | | 2615 |
| | | 2283 | | 2314 | | 2467 |
| 52 | | 2291 | | 2237 | | 2381 |
| 79 | | | | | | |
| 105 | | | | | | |
| 132 | | | | | | |

All polymer modified bitumen exhibit attractive properties for road (and other) applications. Moreover, a quite noticeable drop in dynamic viscosity is observed, in particular for Experiments 2 and 3. The dynamic viscosity at 150°C for the binder of Experiment 3 is relatively high. Experiment 2 is clearly the best performer.

**Table 5**

| **Properties** | **Exp 4** | | **Exp 5** | | **Exp 6** | |
|---|---|---|---|---|---|---|
| | | **SBS-1** | | **SBS-2** | | **SBS-3** |
| Softening point R&B (°C) | 94.5 | | 91.5 | | 88.5 | |
| Penetration at 25°C (dmm) | 71 | | 67 | | 67 | |
| Elastic recovery 20 cm, 13°C (%) | 76.2 | | 73.2 | | 79.2 | |
| Ductility 13°C, cm | >100 | | >100 | | >100 | |
| Dynamic visc. 150°C, 26s⁻¹ (mPas) | 1083 | | 854 | | 790 | |
| Dynamic visc. 150°C, 395s⁻¹ (mPas) | 719 | | 771 | | 848 | |
| Dynamic visc. | | 3858 | | 3640 | | 3757 |
| 120°C, 26s⁻¹ (mPas) | | 2990 | | 3001 | | 3008 |
| | | 2708 | | 2778 | | 2773 |
| | | 2563 | | 2673 | | 2654 |
| 52 | | | | | | |
| 79 | | | | | | |
| 105 | | | | | | |
| 132 | | | | | | |

Exp 4 exhibits the greatest drop in viscosity, whilst having the largest viscosity at 150°C, 26s⁻¹.

### Example 2 (drainage test)

Four polymer modified bitumen were prepared by blending 4.5% KRATON® D1116 (a radial SBC polymer having about 4 arms attached to the residue of the coupling agent.), or 6.5% KRATON D1116, or 4.5% SBS-1, respectively 6% SBS-1 with the PX-100 bitumen. Blending was carried out under standard conditions with a high shear mixer. PMB1 and PMB2 are comparative binders (PMB1 = 4.5% D1116; PMB2 = 6% D1116), PMB3 and PMB4 are binders in accordance with the present invention (PMB3 = 4.5% SBS-1 and PMB4 = 6% AW03/95).

Stone Mastic Asphalt mixes were by mixing at 165°C 6.8% by weight one of the above four polymer modified bitumen (at a pre-mixing temperature of 175°C) with a pre-heated gap graded aggregate (175°C) comprising 10.3% by weight filler; 12.8% by weight crushed sand; 13.0% aggregate 4-8 mm ⌀; 13.1 % by weight aggregate 8-11 mm ⌀, and 50.8% by weight aggregate 11-16 mm ⌀.

The SMA mixes were subjected to the Schellenberg binder drainage test (according to the draft Comité Européen de Normalisation standard no. 12697-18), which measures the drainage during 1 hour at mixing temperature plus 25°C. The results are set out in Table 6.

**Table 6**

| **Binder composition** | **PMB1** | **PMB2** | **PMB3** | **PMB4** |
|---|---|---|---|---|
| Softening point Ring &Ball (°C) | 74 | 82.5 | 64 | 97 |
| Viscosity (mPas) | 2327 | - | 1944 | 2419 |
| | 637 | 986 | 623 | 915 |
| @ | 233 | 391 | 231 | 405 |
| 120°C | | | | |
| @ | | | | |
| 150°C | | | | |
| @ | | | | |
| 180°C | | | | |
| Av. Drainage (%) | 2.0 | 1.5 | 0.6 | 0.7 |

The binders with both 4.5 and 6% of SBS-1 had substantially reduced drainage.

### Technical Field

The present invention concerns asphalt binders based on Polymer Modified Bitumen (PMBs), as well as Hot Mix Asphalt (HMA) based on asphalt binders and mineral aggregate, in particular gap-graded aggregate, as well as pavements made from said HMAs. Also claimed is the novel polymer composition for use in HMA application, and in other asphalt applications, including repair, coating and roofing applications. The new polymer composition may have other applications, e.g. as mentioned in this specification, as well.

## Claims

1. An asphalt binder comprising 85 to 98.5 parts by weight of a bitumen and 15-1.5 parts by weight of a polymer composition, wherein the polymer composition comprises:
(i) from 5 to 70% by weight of a linear styrenic block copolymer (SBC1) comprising at least two polymer blocks each substantially made of an aromatic vinyl compound and at least one polymer block substantially made of a conjugated diene compound and having an apparent molecular weight greater than 250,000 and/or a radial styrenic block copolymer (SBC2) having three or more polymer arms attached to the residue of a cross-linking agent or multifunctional compound, comprising at least two polymer blocks each substantially made of an aromatic vinyl compound and at least one polymer block substantially made of a conjugated diene compound and wherein the polymer arms have an average apparent molecular weight greater than 125,000 and
(ii) from 95 to 30% by weight of an elastomer (EI) having an apparent molecular weight in the range of 120,000 to 250,000, preferably a styrenic diblock copolymer having one polymer block substantially made of an aromatic vinyl compound and at least one polymer block substantially made of a conjugated diene compound .

2. An asphalt binder as claimed in claim 1, wherein the styrenic block copolymer has a molecular weight in the range of 250,000 to 800,000 if said copolymer is a linear polymer, or in the range of 500,000 to 1,500,000 if said copolymer is a branched or star-shaped polymer

3. An asphalt binder as claimed in claim 2, wherein the styrenic block copolymer is selected from the group consisting of those of the formulae
(B)ₚ -(A-B)₂ X; or (B)ₚ -A(B-A)ₙ -(B)ₚ, (linear SBC1)
((B)ₚ (A-B)ₙ)ₘ X (radial SBC2)
wherein A represents the polymer block substantially made of an aromatic vinyl compound, typically a polystyrene block; B a polymer block substantially made of a conjugated diene, typically a polybutadiene block, n is an integer greater than or equal to 1, m is an integer greater than 2, p is 0 or 1, and X is the residue of a coupling agent or multifunctional monomer.

4. An asphalt binder as claimed in any one of claims 1 to 3, wherein the styrenic block copolymer and elastomer may be used in relative amounts of 15 to 70% by weight (SBC1 and/or SBC2) and 85 to 30% by weight (EI).

5. An asphalt binder as claimed in any one of claims 1 to 3, wherein the styrenic block copolymer and elastomer may be used in relative amounts of 20 to 50% by weight (SBC1 and/or SBC2) and 80 to 50% by weight (EI).

6. An asphalt binder as claimed in any one of claims 1 to 3, wherein component (i) and (ii) are components of a polymer composition wherein the elastomer (EI) is a diblock copolymer of formula A-B that is co-produced in the synthesis of the styrenic block copolymer.

7. An asphalt binder as claimed in claim 6, wherein the styrenic block copolymer polymer composition comprises a styrene-butadiene-styrene coupled block copolymer with a large amount of diblock copolymer, with the following characteristics:
styrene content in the range of 25-40%, preferably about 30% by weight:
diblock molecular weight 180,000-215,000, preferably about 200,000:
diblock content 75-85%, preferably 80% by weight (which corresponds with a coupling efficiency of 15-25, preferably 20%);
having a linear structure (manufactured with a difunctional coupling agent),
having an apparent MW (SBS) of 30,000-40,000//300,000-350,000//30,000-40,000, preferably 36000 - 328000 - 36000.

8. A hot mix asphalt comprising 2 to 8 parts by weight of the asphalt binder of anyone of claims 1 to 7, and 98 to 92 parts by weight aggregate material.

9. The hot mix asphalt of claim 8, wherein the aggregate material is gap-graded aggregate material, such as open gap-graded or dense gap-aggregate material.

10. Pavement comprising the compacted hot mix asphalt of claim 8 or 9.

11. Polymer composition comprising a styrene-butadiene-styrene coupled block copolymer with a large amount of diblock copolymer, with the following characteristics:
styrene content in the range of 25-40%, preferably about 30% by weight:
diblock molecular weight 180,000-215,000, preferably about 200,000:
diblock content 75-85%, preferably 80% by weight (which corresponds with a coupling efficiency of 15-25, preferably 20%);
having a linear structure (manufactured with a difunctional coupling agent),
having an apparent MW (SBS) of 30,000-40,000//300,000-350,000//30,000-40,000, preferably 36000 - 328000 - 36000.
